Europäisches Patentamt

European Patent Office

Office européen des brevets

(11) Veröffentlichungsnummer: **0 082 487**
A2

(12) # EUROPÄISCHE PATENTANMELDUNG

(21) Anmeldenummer: 82111681.1

(51) Int. Cl.³: **B 29 H 3/06**

(22) Anmeldetag: 16.12.82

(30) Priorität: 22.12.81 DE 3150901

(43) Veröffentlichungstag der Anmeldung:
29.06.83 Patentblatt 83/26

(84) Benannte Vertragsstaaten:
DE FR IT NL

(71) Anmelder: Linde Aktiengesellschaft
Abraham-Lincoln-Strasse 21
D-6200 Wiesbaden(DE)

(72) Erfinder: Rebhan, Dieter, ing. grad.
Pfaffenrieder Strasse 16
D-8192 Gelting(DE)

(74) Vertreter: Schaefer, Gerhard, Dr.
Linde Aktiengesellschaft Zentrale Patentabteilung
D-8023 Höllriegelskreuth(DE)

(54) Vorrichtung zum Abtrennen von Graten und Noppen an Reifen unterschiedlicher Dimension.

(57) Die Erfindung betrifft eine Vorrichtung zum Abtrennen von Graten und Noppen an Reifen unterschiedlicher Dimension, wobei die Grate und Noppen versprödet werden. Bekannte Vorrichtungen ermöglichen zwar ein maschinelles Entgraten, jedoch ist das Entgratungsergebnis unbefriedigend. Um Grate und Noppen an Reifen auf wirtschaftliche Weise rasch und mit guter Oberflächenqualität abtrennen zu können, wird erfindungsgemäß eine Vorrichtung vorgeschlagen, die durch einen innerhalb des Entgratungsraumes angeordneten, oben offenen und mit Kühlmittel gefüllten Behälter sowie durch eine einen positionierten Reifen aufnehmende und in Rotation versetzende, an den Reifenwülsten und/oder Reifeninnenfläche anliegende Antriebsvorrichtung gekennzeichnet ist. Weiterhin enthält eine erfindungsgemäße Vorrichtung eine, einen Reifen innerhalb des Entgratungsraumes gegenüber der Antriebsvorrichtung positionierende Hubbühne sowie an die Lauffläche und/oder an die Seitenwände des Reifens während dessen Rotation kraftbegrenzt anlegbare, Grate und Noppen abstreifende Werkzeuge. Dabei sind der Behälter und die Hubbühne zum Reifen hin- und von diesem weg bewegbar innerhalb des Entgratungsraumes angeordnet.

EP 0 082 487 A2

Vorrichtung zum Abtrennen von Graten und Noppen
an Reifen unterschiedlicher Dimension

Die Erfindung betrifft eine Vorrichtung zum Abtrennen von
Graten und Noppen an Reifen unterschiedlicher Dimension
mit einem Entgratungsraum, wobei die Grate und Noppen mit
einem flüssigen Kühlmittel versprödet werden.

Reifen besitzen nach Beendigung ihres Herstellungsprozesses
fertigungsbedingte Grate und Noppen. Zur Verbesserung der
Laufeigenschaft der Reifen werden die Grate und Noppen entfernt. Für diesen Zweck ist eine Vorrichtung bekannt (DE-OS
28 16 582), in denen ein Kühlmottel über Sprüheinrichtungen
auf die Lauffläche und die Seitenwände eines Reifens aufgesprüht wird. Dabei werden die Grate und Noppen unter eine
Temperatur abgekühlt, bei der diese spröde werden. Ein zu
entgratender Reifen sitzt während der Versprödung mit der
Lauffläche auf Walzen auf, die ihn in Rotation versetzen.
Mittels kraftbegrenzt an die Lauffläche und Seitenwände
eines Reifens anlegbarer Bürsten wird dann versucht, die
Grate und Noppen abzubrechen.

Diese bekannte Vorrichtung ermöglicht zwar ein maschinelles

Form. 6729 7.78

Entgraten, jedoch ist das Entgratungsergebnis unbefriedigend: Trotz relativ hohem Kühlmittelverbrauch dauert das Verspröden und somit der gesamte Entgratungsvorgang eines Reifens verhältnismäßig lange. Darüber hinaus sind in der Lauffläche der Reifen Kratzer festzustellen. Dicke Grate wurden in der bekannten Vorrichtung häufig nicht entfernt.

Der Erfindung liegt daher die Aufgabe zugrunde, eine Vorrichtung der eingangs beschriebenen Art anzugeben, in der Grate und Noppen an Reifen auf wirtschaftliche Weise rasch und mit guter Oberflächenqualität abgetrennt werden können.

Diese Aufgabe wird erfindungsgemäß gelöst durch einen innerhalb des Entgratungsraumes angeordneten, oben offenen und mit Kühlmittel gefüllten Behälter, durch eine einen positionierten Reifen aufnehmende und in Rotation versetzende, an den Reifenwülsten und/oder Reifeninnenfläche anliegende Antriebsvorrichtung, durch eine, einen Reifen innerhalb des Entgratungsraumes gegenüber der Antriebsvorrichtung positionierende Hubbühne und durch an die Lauffläche und/oder an die Seitenwände des Reifens während dessen Rotation kraftbegrenzt anlegbare, Grate und Noppen abstreifende Werkzeuge, wobei der Behälter und die Hubbühne zum Reifen hin- und von diesem weg bewegbar innerhalb des Entgratungsraumes angeordnet sind.

In der erfindungsgemäßen Vorrichtung wird ein Reifen von einer Hubbühne in eine Position innerhalb des Entgratungsraumes gebracht, in der der Reifen von einer Antriebsvorrichtung aufgenommen und gespannt werden kann. Sobald der Reifen von der Antriebsvorrichtung zentriert und gespannt ist, wird die bewegbare Hubbühne vom Reifen weggefahren. Daraufhin wird der mit flüssigem Kühlmittel gefüllte Behälter zum Reifen bewegt, so daß ein Teil der Lauffläche und der Seitenwände des Reifens in das flüssige Kühlmittel eintauchen. Sobald der Reifen in Kontakt mit dem Kühlmittel kommt, setzt die Antriebsvorrichtung den Reifen in Rotation. Auf diese Weise werden alle Grate und Noppen in das Kühlmittel eingetaucht. Nach oder bereits während des Versprödungsvorganges werden abstreifende Werkzeuge an die Lauffläche und/oder die Seitenwände des Reifens kraftbegrenzt angelegt. Unter abstreifendem Werkzeug ist hierbei ein starrer Körper zu verstehen, beispielsweise ein an die Querschnittsform der Lauffläche angepaßter Bügel. Sobald der Versprödungsvorgang beendet ist, wird der Behälter mit dem flüssigen Kühlmittel entfernt und die Hubbühne erneut zum Reifen hin bewegt. Nach Beendigung der Entgratung wird der Reifen von der Hubbühne aufgenommen und weitergeleitet.

War man bisher der Auffassung, ein optimales Verspröden von Graten und Noppen wäre durch Aufsprühen eines flüssigen oder gasförmigen Kühlmittels möglich, so wurde erfindungsgemäß festgestellt, daß ein Eintauchen eines zu entgratenden, in Rotation versetzten Reifens in ein Kühlmittelbad nicht nur durch das intensive und schnelle Abkühlen zu einem wesentlich rascheren Verspröden der zu entfernenden Teile, sondern auch zu einem erheblich geringeren Kühlmittelverbrauch pro Reifen führt. Die in der erfindungsgemäßen Vorrichtung entgrateten Reifen besitzen eine vollständig kratzerfreie Lauffläche, von der auch Grate größerer Dicke entfernt sind. Hauptsächlich wegen des kürzeren Versprödungsvorganges dauert die gesamte Entgratung kürzer als in der bekannten Vorrichtung.

Erfindungsgemäß wird ein Reifen von einer Antriebsvorrichtung gehalten und in Rotation versetzt, nachdem dieser von der Hubbühne in eine geeignete Position gebracht worden ist. Dabei hat es sich in einer Ausgestaltung des Erfindungsgedankens als besonders vorteilhaft erwiesen, wenn die Antriebsvorrichtung aus zwei zu den Seitenwänden eines positionierten Reifens bewegbaren, an den Reifenwülsten anliegenden Scheiben besteht, von denen eine Scheibe an einen Antrieb angeschlossen und die andere Scheibe als kraftbegrenzt anlegbare Mitlaufscheibe ausgebildet ist. Zum Spannen des Reifens werden die beiden Scheiben lediglich in Richtung der Symmetrieachse des Reifens, d.h. bei einem senkrecht stehenden Reifen horizontal auf dessen Seitenwände zubewegt. Bei einer derartigen Antriebsvorrichtung wird einerseits ein Eintauchen von Antriebsteilen in das Kühlmittelbad vermieden, andererseits aber der Wärmetausch zwischen Kühlmittel und eingetauchtem Reifen nicht behindert.

Für das Zentrieren und Spannen von Reifen mit verschiedenen Größen ist in einer vorteilhaften Weiterbildung der erfindungsgemäßen Vorrichtung jeweils die dem Reifen zugewandte Seite der Scheibe konisch ausgebildet. Reifen unterschiedlicher Dimensionen werden durch eine derartige Antriebsvorrichtung sicher erfaßt und zentriert.

Rollen die zu entgratenden Reifen selbsttätig in den Entgratungsraum, so ist es in einer weiteren Ausgestaltung der Erfindung vorteilhaft, wenn zur exakten Positionierung eines Reifens im Entgratungsraum eine im wesentlichen zur Hauptbewegungsrichtung der Hubbühne senkrecht bewegbare Begrenzungsplatte angeordnet ist, durch die die seitliche Position des Reifens auf der Hubbühne festgelegt wird.

Zur Durchführung einer weitgehend automatischen bzw. raschen Arbeitsweise der Vorrichtung ist es in einer Variante der erfindungsgemäßen Vorrichtung besonders zweckmäßig, wenn in den Entgratungsraum jeweils ein Zufuhr- und ein Ausfuhrschacht mündet, deren Querschnittsfläche durch die maximale Breite und den maximalen Durchmesser der zu entgratenden Reifen bestimmt ist. Dem Erfindungsgedanken entsprechend können die Reifen aufrecht stehend geführt durch die Seitenfläche des Zufuhr- bzw. Ausfuhrschachtes in den Entgratungsraum geleitet werden. Die Länge des Zufuhrschachtes ist dabei bestimmt durch die Anzahl der vorrätigen Reifen.

Für ein selbständiges Einlaufen der Reifen in den Entgratungsraum hat es sich in einer vorteilhaften Ausgestaltung des Erfindungsgedankens als zweckmäßig erwiesen, daß Zufuhr-, Ausfuhrschacht und Hubbühne als in Richtung zum Ausfuhrschacht geneigte schiefe Ebene ausgebildet sind. In einer weiteren und sehr vorteilhaften Variante der erfindungsgemäßen Vorrichtung, bei der das Einführen eines Reifens vollautomatisch abläuft, kann der Zufuhrschacht wenigstens zwei hintereinander angeordnete Reifen aufnehmen. Im Zufuhrschacht sind dabei zwei automatisch gesteuerte Sperren angeordnet, von denen eine Sperre in geschlossener Stellung alle Reifen im Zufuhrschacht und die andere Sperre in geschlossener Stellung alle Reifen im Zufuhrschacht bis auf den vordersten, vor dem Entgratungsraum befindlichen Reifen zurückhält.

Die zuletztgenannte Sperre hält dabei die nachfolgenden Reifen zurück, wenn der vorderste Reifen in den Entgratungsraum rollt. Hierfür genügt z.B. eine automatisch betätigte Stange, die durch den zweiten Reifen vor dem Entgratungsraum geschoben ist, bis die andere Sperre wieder schließt. Diese Sperre wiederum hält in geschlossener Stellung die Reifen im Zufuhrschacht, bis der Entgratungsvorgang beendet ist.

Um mit ein und derselben Vorrichtung Reifen unterschiedlicher Dimensionen entgraten zu können, ohne daß ein Umbau der Hubbühne bzw. einer Begrenzungsplatte erforderlich ist, wird der Durchmesser jedes in den Entgratungsraum rollenden Reifens in einer Ausbildung der erfindungsgemäßen Vorrichtung automatisch bestimmt und die Stellung von zur Positio - nierung dieses Reifens dienenden Elementen automatisch gesteuert.

Eine hierfür geeignete, besonders einfache Vorrichtung ist eine z.B. im Zufuhrschacht angeordnete Lichtschranke.

Zur Zuführung, Versprödung und Entgratung ist es in einer erfindungsgemäßen Vorrichtung erforderlich - insbesondere für einen vollautomatischen Betrieb - , mehrere Teile dieser Vorrichtung in einer bestimmten Reihenfolge und in einer bestimmten Richtung zu bewegen. Derartige Teile sind z.B. die Hubbühne, der Behälter für das Kühlmittel, die Begrenzungsplatte, die Sperren, die zum Abbrechen der Grate und Noppen dienenden Werkzeuge sowie die Antriebsscheiben. Da sich alle Bewegungen in einem konstanten Rhythmus wiederholen, sind in einer zweckmäßigen Ausgestaltung der Erfindung die Antriebselemente aller bewegbaren Teile an eine Steuereinheit angeschlossen.

Hierbei hat es sich als besonders zweckmäßig erwiesen, wenn alle bewegbaren Teile der Vorrichtung mit hydraulisch oder pneumatisch arbeitenden Antriebselementen verbunden sind. Erfindungsgemäß wird ein zu entgratender Reifen zunächst mit einer Hubbühne positioniert. Nach dem Zentrieren und Spannen muß diese Hubbühne, auf der der (üblicherweise aufrecht stehende) Reifen ruht, vom Reifen weg bewegt werden, da nun der Kühlmittelbehälter in dessen Position gebracht werden muß.

Diese Möglichkeiten bieten die beiden folgenden vorteilhaften Varianten der erfindungsgemäßen Vorrichtung:

In der einen Variante besitzt die Hubbühne zwei vertikale Leitbleche und ist ausschließlich vertikal bewegbar. Dabei bildet die als schiefe Ebene ausgebildete Hubbühne in der höchsten Position eine Fortsetzung der schiefen Ebene des Zufuhrschachtes und in der tiefsten Position eine Fortsetzung der schiefen Ebene des Ausfuhrschachtes. Dagegen ist der Behälter sowohl horizontal als auch innerhalb des Entgratungsraumes vertikal bewegbar.

In dieser Ausgestaltung befindet sich die Hubbühne direkt unterhalb der Antriebsvorrichtung. Zur Positionierung des Reifens ist lediglich eine Auf- und Abbewegung der Hubbühne erforderlich. In der höchsten Position der Hubbühne rollt ein zu entgratender Reifen selbständig und übergangslos aus dem Zufuhrschacht auf die Hubbühne und wird dort durch die seitlichen Leitbleche gegen ein Verkanten bzw. Kippen gesichert und durch eine Begrenzungsplatte positioniert. Nachdem der Reifen von der Antriebsvorrichtung übernommen worden ist, wird die Hubbühne in die tiefste Position gefahren. Nun kann der Kühlmittelbehälter zunächst in den Bereich unterhalb des Reifens in den Entgratungsraum eingefahren und dann auf die Höhe des Reifens angehoben werden. Zur Abgabe eines entgrateten Reifens sind die gleichen Bewegungen in umgekehrter Reihenfolge auszuführen. Da die schiefe Ebene des Ausfuhrschachtes nicht in der Verlängerung der schiefen Ebene des Einfuhrschachtes liegen muß, sondern mit Vorteil tiefer liegen kann, rollt der Reifen von der Hubbühne erst in deren tiefsten Position in den Ausfuhrschacht.

Bei einem schnellen Ein- und Ausfahren des Kühlmittelbehälters ist eine Bewegung der Kühlmittelflüssigkeit die Folge. Daher hat es sich in einer weiteren Ausgestaltung der erfindungsgemäßen Vorrichtung als vorteilhaft erwiesen, wenn innerhalb des Behälters Glättungskugeln oder Schwallwände angeordnet sind. Diese Einrichtungen bewirken eine Beruhigung der Flüssigkeitsbewegungen.

In der anderen Variante ist dagegen die Hubbühne einerseits horizontal bewegbar, wobei diese in der Arbeitsposition eine Fortsetzung der schiefen Ebene sowohl des Zufuhr- als auch des Ausfuhrschachtes bildet und sich in der Ruheposition außerhalb des Raumes unter dem von der Antriebsvorrichtung gehaltenen Reifen befindet, und andererseits zur Anpassung an Reifen unterschiedlichen Durchmessers vertikal bewegbar. Dagegen ist der Behälter ausschließlich vertikal bewegbar. Zwar ist in dieser Ausgestaltung wenigstens eine zusätzliche Antriebsvorrichtung, z.B. ein Pneumatikzylinder, erforderlich, um die Begrenzungsplatte an Reifen unterschiedlichen Durchmessers anpassen zu können. Auch für die Anpassung der Hubbühne an verschiedene Reifendimensionen kann eine weitere Antriebsvorrichtung erforderlich sein, jedoch kann deren Höhe auch dadurch angepaßt werden, daß die Hubbühne mehr oder weniger weit in den Entgratungsraum ausgefahren wird.

Von besonderem Vorteil ist in dieser Variante jedoch, daß der Kühlmittelbehälter unterhalb des von der Antriebsvorrichtung gehaltenen Reifens angeordnet ist und daher nur auf- und ab bewegt werden muß. Glättungskugeln oder Schwallwände sind daher nicht notwendig.

Anstelle einer Hubbühne mit Leitblechen genügt eine Platte ohne Leitbleche, so daß die Hubbühne relativ klein gehalten werden kann. Zur Kippsicherung sind jedoch zusätzliche, im Entgratungsraum fest eingebaute Leitbleche notwendig.

In dieser Ausgestaltung ist es zweckmäßig, wenn die schiefe Ebene des Ausfuhrschachtes in etwa in der Verlängerung der schiefen Ebene des Einfuhrschachtes liegt und die Begrenzungsplatte auf- und ab bewegt wird.

In dieser Ausgestaltung muß der Kühlmittelbehälter daher lediglich auf einem vergleichweise kurzem Weg bewegt werden. Außerdem entfällt vorteilhafterweise eine Beförderung des Reifens von der Spann- und Zentriervorrichtung zum Ausfuhrschacht. Schließlich ist die Bauhöhe dieser Variante deutlich kleiner als die erste Variante.

Als besonders effektive und dennoch einfache Werkzeuge zum Abbrechen der versprödeten Grate und Noppen eignen sich in einer weiteren Ausgestaltung der Erfindung Walzen oder Abstreifbügel. Die Walzen können hierbei ebenfalls rotieren.

Im folgenden soll anhand schematischer Skizzen zwei Ausführungsbeispiele einer erfindungsgemäßen Vorrichtung sowie die entsprechenden Funktionsabläufe geschildert werden:

Es zeigen:

Figur 1    einen Längsschnitt durch eine Reifenentgratungsvorrichtung, in der sich der Kühlmittelbehälter nur auf- und ab bewegt.

Figur 2    einen Längsschnitt durch eine Reifenentgratungsvorrichtung, in der sich die Hubbühne nur aufab bewegt.

Figur 3    einen schematischen Querschnitt durch eine in Figur 2 dargestellte Vorrichtung.

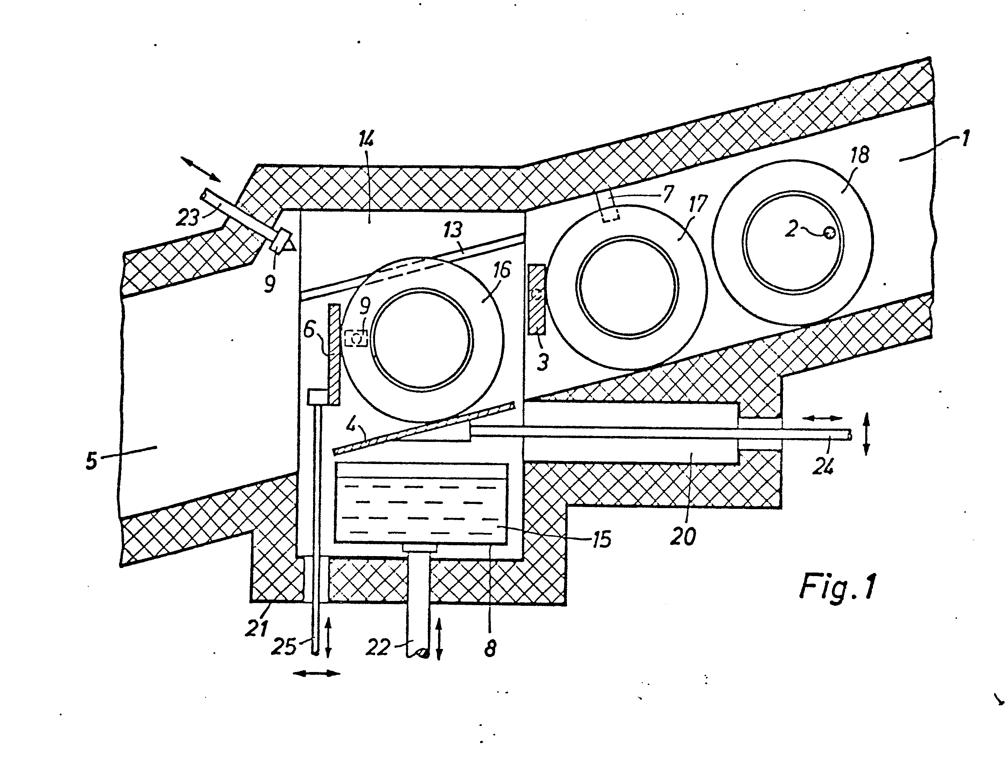

In allen Figuren sind Bauteile gleicher Funktion mit denselben Bezugszeichen versehen. Gemäß Figur 1 liegen ein Zufuhrschacht 1, eine Hubbühne 4 und ein Ausfuhrschacht 5 annähernd auf einer Linie mit der gleichen Neigung. Eine geringe Abstufung zwischen Zufuhrschacht 1, Hubbühne 4 und Ausfuhrschacht 5 ist notwendig, um Reifen mit unterschiedlichen Größen zu bearbeiten. Die Neigung der schiefen Ebene ist so gewählt, daß die Reifen auch bei Reif- oder Eis-

bildung noch selbständig zum Entgratungsraum laufen. Der Querschnitt der Schachte richtet sich nach dem größten zu entgratenden Reifen, die Länge des Einfuhrschachtes 1 wird durch die Anzahl der vorrätigen Reifen im Zufuhrschacht bestimmt.

Eine Sperre 2 hält die nachfolgenden Reifen zurück, wenn der vorderste Reifen in einen Entgratungsraum 14 rollt. In der Figur 1 sind lediglich drei Reifen 16, 17, 18 dargestellt. Hierfür genügt eine pneumatisch betätigte Stange, die durch den zweiten Reifen 18 geschoben ist, bis sich eine Sperre 3 schließt. Sperre 3 hält in geschlossener Stellung die Reifen 17, 18 im Zufuhrschacht 1, bis der Entgratungsvorgang beendet ist. Durch pneumatisches Öffnen der Sperre 3 wird ein neuer Entgratungszyklus freigegeben. Die Hubbühne 4 bewegt sich im wesentlichen nur horizontal pneumatisch hin und her und dient dazu, den einzuordnenden Reifen 16 für den Spannvorgang zu positionieren und nach dem Entgraten ein Ausrollen des Reifens in den Ausfuhrschacht 5 zu ermöglichen. Zur Anpassung an Reifen unterschiedlichen Durchmessers, kann die Hubbühne 4 über einen weiteren Pneumatikzylinder in eine Vertikalbewegung versetzt werden. Als Kippsicherung dienen seitliche, fest im Entgratungsraum 14 eingebaute Leitbleche 13.

In Figur 1 ist die Hubbühne 4 in Arbeitsposition dargestellt. Während der Abkühlung und Versprödung eines Reifens wird die Hubbühne 4 in einen Raum 20 zurückgefahren. Dies ist die Ruheposition der Hubbühne 4. Eine Begrenzungsplatte 6 stoppt einen einlaufenden Reifen 16 und zentriert ihn sogleich zusammen mit der Hubbühne 4 für den Spannvorgang. Die Begrenzungsplatte 6 wird pneumatisch vertikal und, zur Anpassung an Reifen verschiedenen Durchmessers, horizontal bewegt.

Die Reifengröße wird bei dem Reifen 17 vor der Sperre 3 durch eine Lichtschranke 7 ermittelt. Über eine nicht dargestellte Regeleinheit werden die Positionen der Begrenzungsplatte 6 (durch deren horizontale Bewegung) und der Hubbühne 4 (z.B. durch deren vertikale Bewegung) eingestellt. Fahren die Hubbühne 4 und die Begrenzungsplatte 6 am Ende eines Entgratungszyklus vor, stellen sie sich zugleich auf die jeweilige Reifengröße ein.

Eine an einen nicht dargestellten Antrieb angeschlossene Antriebs- und eine Mitlaufscheibe 11, 12 sind außerhalb des Entgratungsbehälters 21 drehbar gelagert. Sie zentrieren und spannen den Reifen 16. Für das Zentrieren werden die Scheiben 11,12 konisch ausgebildet, so daß die verschiedenen Reifengrößen erfaßt werden. Die Scheiben 11,12 spannen und lösen den Reifen 16 durch horizontale pneumatische Bewegung, wobei mindestens der Pneumatikzylinder die Scheiben 11,12 spannen und lösen den Reifen 16 durch horizontale pneumatische Bewegung, wobei mindestens der Pneumatikzylinder der Mitlaufscheibe 12 aufgrund der unterschiedlichen Reifenmaße kraftbegrenzt arbeiten muß. Die Drehzahl der Antriebsscheibe 11 ist stufenlos einstellbar.

Durch das pneumatische Hochfahren eines Behälters 8 für das Kühlmittel wird der rotierende Reifen in das Kühlmittelbad 15, im Ausführungsbeispiel in flüssigen Stickstoff, getaucht. Der Behälter 8 ist doppelwandig und vakuumisoliert. Die Niveauregelung des flüssigen Stickstoffs im Behälter erfolgt durch einen Zweipunktregler.

Pneumatische Werkzeuge 9 arbeiten wegen der unterschiedlichen Reifengröße kraftbegrenzt Grate und Noppen ab. Ihre Anzahl und Form richtet sich nach Reifenprofil und Grat. Der Ausfuhrschacht 5 entspricht in seinem Querschnitt dem Zufuhrschacht. Aus Gründen der Wirtschaftlich-

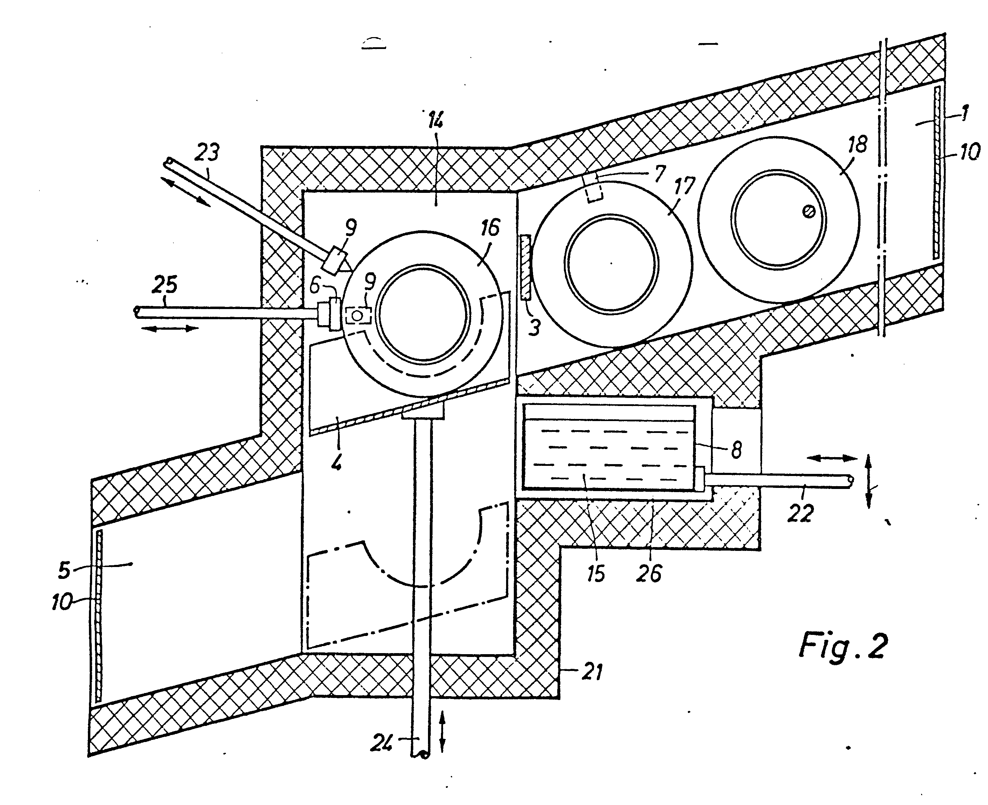

keit ist der Entgratungsbehälter 21 isoliert, der Zufuhr- und der Ausfuhrschacht jeweils mit einer Gassperre 10 (Figur 2) versehen.

Zum Schutz vor Kälteeinwirkung werden alle Antriebe und Pneumatikzylinder außerhalb des Entgratungsbehälters 21 angebracht und gegebenenfalls zusätzlich durch Heizmanschetten geschützt. In den Figuren sind weder Antriebe noch Pneumatikzylinder dargestellt. An den von den Pneumatikzylindern beaufschlagten Stangen 22 bis 25 sind durch Pfeile deren Bewegungsrichtungen symbolisch angegeben.

Die in Figur 2 dargestellte Variante einer erfindungsgemäßen Vorrichtung weist folgende Unterschiede zu der in Figur 1 dargestellten Vorrichtung auf:

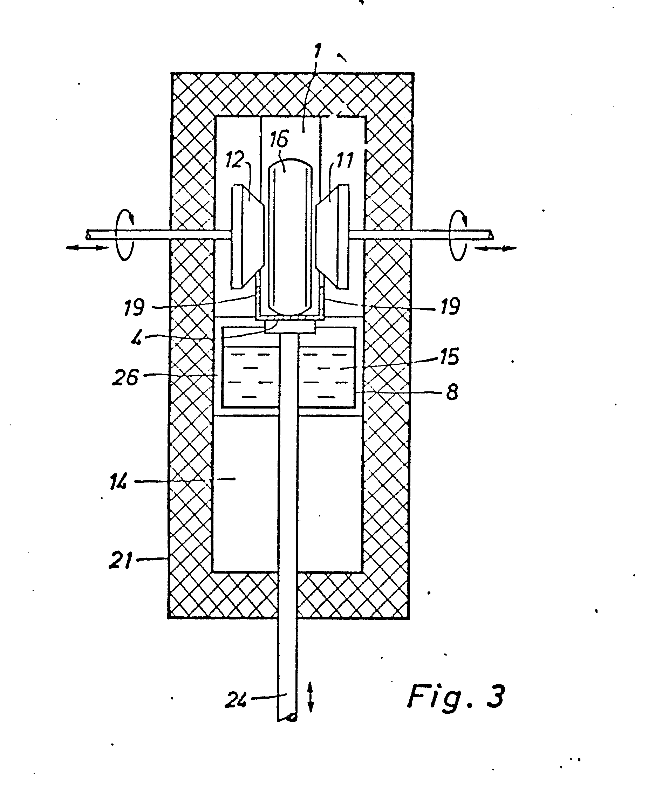

Die schiefe Ebene des Ausfuhrschachtes 5 liegt mit der des Einfuhrschachtes 1 nicht auf einer Linie sondern tiefer. Die Hubbühne 4 bewegt sich pneumatisch auf und ab und dient nicht nur zum Positionieren des Reifens sondern auch dazu, den Reifen nach dem Entgraten zum Ausfuhrschacht 5 zu fördern. Als Kippsicherung dienen seitliche Leitbleche 19 (Figur 3). Im eingefahrenen Zustand verlängert die Hubbühne 4 die Ebene des Ausfuhrschachtes 5. Im ausgefahrenen Zustand stellt sich die Höhe je nach Reifengröße ein.

Die Begrenzungsplatte 6 wird pneumatisch nur horizontal bewegt. Die ausgefahrene Stellung des zugehörigen Pneumatikzylinders wird ebenfalls je nach Reifengröße - gemessen durch Lichtschranke 7 - begrenzt.

Der Kühlmittelbehälter 8 befindet sich während des Zentrier- und Spannvorganges in einem Raum 26 und wird erst für die Versprödung aus diesem Raum in den eigentlichen Entgratungsraum 14 eingefahren und anschließend zum Reifen 16 hochgefahren. In dieser Variante sind beiderseitige Entlagendämpfungen der zum Ein- und Hochfahren erforderlichen Pneumatikzylinder zweckmäßig. Nicht dargestellt sind Glättungskugeln bzw. Schwallwände im Behälter 8.

In Figur 3 ist ein Reifen 16 unmittelbar vor dem Zentrieren bzw. Spannen dargestellt: Reifen 16 steht auf der Hubbühne 4 und ist durch seitliche Leitbleche, von denen nur der untere Teil dargestellt ist, gegen ein Verkippen gesichert. Behälter 8 befindet sich in Raum 26. Hubbühne 4 ist voll ausgefahren. Die konisch geformten Scheiben 11, 12 bewegen sich horizontal auf den Reifen 16 zu um an dessen Reifenwülsten anzulegen und den Reifen auf diese Weise zu spannen und zu zentrieren.

Der Funktionsablauf dieser in den Figuren 2 und 3 dargestellten Variante gestaltet sich folgendermaßen:

Die Zuführung der Reifen erfolgt gleichzeitig mit dem Entgratungsprozeß. Hierbei läuft der erste Reifen selbständig im Zufuhrschacht 1 bis zur Sperre 3. Der nachfolgende Reifen wird durch Sperre 2 so lange fixiert, bis Sperre 3 den ersten Reifen in den Entgratungsraum 14 freigegeben und wieder geschlossen hat. Durch Öffnen der Sperre 2 kann der nächste Reifen bis vor den Entgratungsraum rollen.

1. Sobald die Sperre 3 geöffnet wird, läuft der Reifen auf die Hubbühne 4, wird durch die Platte 6 gestoppt, und, ausgelöst durch Lichtschranke 7, durch bereits erfolgte Positionierung von Hubbühne 4 und Platte 6 für den Spannvorgang zentriert.

2. Der Reifen wird durch die Antriebs- und durch die Mitlaufscheibe 11, 12 gespannt (Figur 3).

3. Die Hubbühne 4 und die Platte 6 fahren zurück, gleichzeitig wird der Reifen durch die Antriebsscheibe 11 in Rotation versetzt.

4. Der Behälter für flüssigen Stickstoff 8 fährt unter den Reifen und taucht ihn bis zu den Scheiben 11, 12 in flüssigen Stickstoff. Die Kühlung beginnt. Gleichzeitig arbeiten die Werkzeuge 9 kraftbegrenzt Grate und Noppen ab.

5. Ist der Grat entfernt, so fährt der Behälter 8 für flüssigen Stickstoff und die Werkzeuge 9 zurück.

6. Die Hubbühne 4 fährt unter den Reifen.

7. Die Scheiben 11 und 12 öffnen, so daß der Reifen wieder auf der Hubbühne 4 steht.

8. Die Hubbühne fährt ab und läßt den Reifen in den Ausfuhrschacht 5 abrollen.

9. Die Hubbühne 4 und die Platte 6 fahren in Startposition.

Die Punkte 6 und 8 können eventuell entfallen, wenn es möglich ist, den Reifen durch Öffnen der Scheiben 11 und 12 auf die Hubbühne fallen zu lassen. Eine seitliche Führung ist in diesem Fall notwendig. Hierbei ist es auch möglich, nur die Mitlaufscheibe 12 zu benutzen, da der Reifen bei ausreichender Konizität der Antriebsscheibe 11 von alleine abrutscht.

Der Funktionsablauf der in Figur 1 dargestellten Vorrichtung entspricht im wesentlichen dem der in Figur 2 dargestellten Vorrichtung, jedoch muß der Behälter 8 nur noch in eine Richtung mit kürzerem Weg bewegt werden. Auch entfällt die Beförderung des Reifens 16 von der Spannvorrichtung 11, 12 zum Ausfuhrschacht 5. Die Bewegungen der neu hinzugekommenen Positionierzylinder erfordern keinen zusätzlichen Zeitaufwand, da sie zeitgleich mit dem Ausfahren der Begrenzungsplatte 6 und der Ebene 4 erfolgen können.

Ausführungsbeispiel:
Es wurden Reifen der Größe 165 SR 13 mit ca. 800 Noppen pro Reifen und einem Grat längs des Umfangs der Seitenwände behandelt. Die Noppen am Umfang sind in Laufrichtung versetzt und besitzen in Laufrichtung einen Abstand von 30 bis 35 mm.

Noppenmasse:    Höhe    9 bis 13 mm, Durchmesser ca. 1 mm, Durchmesser des Noppenfusses ca. 2 mm.

Reifengewicht:  Ca. 8 kg

Eintauchtiefe
in das Kühlmit-  Ca. 1/4 des Reifenumfanges
telbad:

Taktzeit:       10 Sekunden.

## Patentansprüche

1. Vorrichtung zum Abtrennen von Graten und Noppen an Reifen unterschiedlicher Dimension mit einem Entgratungsraum, wobei die Grate und Noppen mit einem flüssigen Kühlmittel versprödet werden, gekennzeichnet durch einen innerhalb des Entgratungsraumes (14) angeordneten, oben offenen und mit Kühlmittel (15) gefüllten Behälter (8), durch eine einen positionierten Reifen (16) aufnehmende und in Rotation versetzende, an den Reifenwülsten und/oder Reifeninnenfläche anliegende Antriebsvorrichtung (11,12), durch eine, einen Reifen (16) innerhalb des Entgratungsraumes (14) gegenüber der Antriebsvorrichtung (11,12) positionierende Hubbühne (4) und durch an die Lauffläche und/oder an die Seitenwände des Reifens (16) während dessen Rotation kraftbegrenzt anlegbare, Grate und Noppen abstreifende Werkzeuge (9), wobei der Behälter (8) und die Hubbühne (4) zum Reifen (16) hin- und von diesem weg bewegbar innerhalb des Entgratungsraumes (14) angeordnet sind.

2. Vorrichtung nach Anspruch 1, dadurch gekennzeichnet, daß die Antriebsvorrichtung aus zwei zu den Seitenwänden eines positionierten Reifens bewegbaren, an den Reifenwülsten anliegenden Scheiben (11,12) besteht, von denen eine Schei-

Form. 5729 7.78

be (11) an einen Antrieb angeschlossen und die andere Scheibe (12) als kraftbegrenzt anlegbare Mitlaufscheibe ausgebildet ist.

3. Vorrichtung nach Anspruch 2, dadurch gekennzeichnet, daß jeweils die dem Reifen zugewandte Seite der Scheibe konisch ausgebildet ist.

4. Vorrichtung nach einem der Ansprüche 1 bis 3, gekennzeichnet durch eine im wesentlichen zur Hauptbewegungsrichtung der Hubbühne (4) senkrecht bewegbare, zur Positionierung eines Reifens (16) dienende Begrenzungsplatte (6).

5. Vorrichtung nach einem der Ansprüche 1 bis 4, dadurch gekennzeichnet, daß in den Entgratungsraum (14) jeweils ein Zufuhr- und ein Ausfuhrschacht (1), (5) münden, deren Querschnittsfläche durch die maximale Breite und den maximalen Durchmesser der zu entgratenden Reifen bestimmt ist.

6. Vorrichtung nach Anspruch 5, dadurch gekennzeichnet, daß Zufuhr- und Ausfuhrschacht und Hubbühne als in Richtung zum Ausfuhrschacht geneigte schiefe Ebene ausgebildet sind.

7. Vorrichtung nach Anspruch 6, dadurch gekennzeichnet, daß der Zufuhrschacht wenigstens zwei hintereinander angeordnete Reifen aufnehmen kann und im Zufuhrschacht zwei automatisch gesteuerte Sperren angeordnet sind, von denen eine Sperre (3) in geschlossener Stellung alle Reifen im Zufuhrschacht (1) und die andere Sperre (2) in geschlossener Stellung alle Reifen im Zufuhrschacht (1) bis auf den vordersten, vor dem Entgratungsraum (14) befindlichen Reifen (17) zurückhält.

8.  Vorrichtung nach einem der Ansprüche 1 bis 7, gekennzeichnet durch eine den Durchmesser eines zu entgratenden Reifens (17) bestimmende Vorrichtung (7), die die Stellung von zur Positionierung dieses Reifens dienenden Elementen (4,6) automatisch steuert.

9.  Vorrichtung nach Anspruch 8, dadurch gekennzeichnet, daß die den Durchmesser bestimmende Vorrichtung (7) eine Lichtschranke ist.

10. Vorrichtung nach einem der Ansprüche 1 bis 9, dadurch gekennzeichnet, daß die Antriebselemente aller bewegbaren Teile der Vorrichtung an eine Steuereinheit angeschlossen sind.

11. Vorrichtung nach einem der Ansprüche 1 bis 10, dadurch gekennzeichnet, daß alle bewegbaren Teile der Vorrichtung mit hydraulisch oder pneumatisch arbeitenden Antriebselementen verbunden sind.

12. Vorrichtung nach einem der Ansprüche 6 bis 11, dadurch gekennzeichnet, daß die Hubbühne (4) zwei vertikale Leitbleche besitzt und ausschließlich vertikal bewegbar ist, wobei die als schiefe Ebene ausgebildete Hubbühne in der höchsten Position eine Fortsetzung der schiefen Ebene des Zufuhrschachtes (1) und in der tiefsten Position eine Fortsetzung der schiefen Ebene des Ausfuhrschachtes (5) bildet, während der Behälter (8) sowohl horizontal als auch innerhalb des Entgratungsraums (14) vertikal bewegbar ist.

13. Vorrichtung nach Anspruch 12, dadurch gekennzeichnet, daß innerhalb des Behälters (8) Glättungskugeln oder Schwallwände angeordnet sind.

14. Vorrichtung nach einem der Ansprüche 6 bis 11, dadurch gekennzeichnet, daß die Hubbühne einerseits horizontal bewegbar ist, wobei diese in der Arbeitsposition eine Fortsetzung der schiefen Ebene sowohl des Zufuhr- als auch des Ausfuhrschachtes bildet und sich in der Ruheposition außerhalb des Raumes unter dem von der Antriebsvorrichtung (11,12) gehaltenen Reifen (16) befindet, und andererseits zur Anpassung an Reifen unterschiedlichen Durchmessers vertikal bewegbar ist, während der Behälter (8) ausschließlich vertikal bewegbar ist.

15. Vorrichtung nach einem der Ansprüche 1 bis 14, dadurch gekennzeichnet, daß die abstreifenden Werkzeuge, Walzen oder Abstreifbügel sind.

Fig.1

Fig. 2

2/3

0082487

Fig. 3